# EUROPÄISCHE PATENTANMELDUNG

(11) **EP 3 819 548 A1**
(43) Veröffentlichungstag der Anmeldung: **12.05.2021**
(21) Anmeldenummer: 20204974.8
(22) Anmeldetag: 30.10.2020
(51) Int. Cl.: F24C 15/20, B01D 53/86

(54) **GERUCHSFILTER FÜR EINE DUNSTABZUGSVORRICHTUNG**

(30) Priorität: 06.11.2019 DE 102019217111
(71) Anmelder: Bruckbauer, Wilhelm, 83115 Neubeuern (DE)
(72) Erfinder: Könneker, Walter, 6342 Niederndorf (AT); Adlmaier, Martin, 6342 Niederndorf (AT); Gößler, Siegfried, 6342 Niederndorf (AT)
(74) Vertreter: Rau, Schneck & Hübner Patentanwälte Rechtsanwälte PartGmbB

(57) **Zusammenfassung**

Ein Geruchsfilter (15) für eine Dunstabzugsvorrichtung (3) umfasst mindestens ein Trägerelement (18) mit mindestens einem katalytischen Material (22) und mindestens eine Strahlungsquelleneinheit (24) zum Bestrahlen des katalytischen Materials (22) mit elektromagnetischer Strahlung (25a) zum Bewirken einer katalytischen Reaktion, wobei die mindestens eine Strahlungsquelleneinheit (24) hinsichtlich ihres Emissionsspektrums unterschiedlich einstellbar ist.

## Beschreibung

Die vorliegende Patentanmeldung nimmt die Priorität der deutschen Patentanmeldung DE 10 2019 217 111.7 in Anspruch, deren Inhalt durch Bezugnahme hierin aufgenommen wird.

Die Erfindung betrifft einen Geruchsfilter für eine Dunstabzugsvorrichtung. Ferner betrifft die Erfindung eine Dunstabzugsvorrichtung mit einem derartigen Geruchsfilter und ein Kochfeldsystem mit einer derartigen Dunstabzugsvorrichtung.

Aus der WO 2006/095 199 A1 ist ein Geruchsfilter für eine Dunstabzugsvorrichtung bekannt, aufweisend ein Trägerelement mit einem katalytischen Material und mehreren Strahlungsquellen zum Bestrahlen des katalytischen Materials mit ultraviolettem Licht zum Bewirken einer katalytischen Reaktion zum Abbau von Geruchsstoffen. Der Umfang der an dem katalytischen Material ablaufenden Reaktionen ist abhängig von der Intensität und der Wellenlängenverteilung der auf das katalytische Material einwirkenden ultravioletten Strahlung. Aufgrund mangelnder Abstimmung des Emissionsspektrums auf die photoelektrischen Eigenschaften des katalytischen Materials, insbesondere aufgrund von Alterungseffekten, ist die Effizienz des Geruchsfilters reduziert.

Es ist eine Aufgabe der Erfindung, einen Geruchsfilter für eine Dunstabzugsvorrichtung zu verbessern.

Diese Aufgabe wird durch einen Geruchsfilter mit den Merkmalen des Anspruchs 1 gelöst. Erfindungsgemäß wurde erkannt, dass ein Geruchsfilter für eine Dunstabzugsvorrichtung, aufweisend ein Trägerelement mit mindestens einem katalytischen Material und mindestens einer hinsichtlich ihres Emissionsspektrums unterschiedlich einstellbare Strahlungsquelleneinheit zum Bestrahlen des katalytischen Materials, den Abbau von Geruchsstoffen besonders effizient und zuverlässig gewährleistet. Aus der an dem katalytischen Material ablaufenden photokatalytischen Reaktion resultieren Reaktionsprodukte, die ursächlich für den Abbau der Geruchsstoffe sind. Insbesondere bewirkt die auf das katalytische Material einwirkende elektromagnetische Strahlung ein Umlagern von Elektronen aus einem Grundzustand in einen energiereichen Zustand, insbesondere aus einem Valenzband in ein Leitungsband. Die energiereichen Elektronen reagieren an der Oberfläche des katalytischen Materials mit dem umgebenden Luftsauerstoff. Als Reaktionsprodukte entstehen freie Radikale, unter anderem Hydroxid- und Ozonmoleküle. Diese Reaktionsprodukte können mit Geruchsstoffen reagieren und bewirken dabei deren Abbau in olfaktorisch nicht wahrnehmbare Verbindungen. Ferner verhindern die Reaktionsprodukte ein Ausbreiten gesundheitsschädlicher Keime in der Dunstabzugsvorrichtung. Mittels des erfindungsgemäßen Geruchsfilters werden also Geruchsstoffe abgebaut, insbesondere zersetzt, und nicht lediglich absorbiert beziehungsweise gespeichert. Auch Fettpartikel können mittels des Geruchsfilters abgebaut werden, wodurch eine Selbstreinigung des katalytischen Materials ermöglicht wird. Die Standzeit des Geruchsfilters ist daher nicht durch dessen Speicherkapazität begrenzt.

Der Umfang und die Zusammensetzung der bei der photokatalytischen Reaktion entstehenden Reaktionsprodukte sind allerdings abhängig von der Intensität und der Wellenlängenverteilung der auf das katalytische Material einwirkenden Strahlung. Je höher die Intensität der emittierten Strahlung und je genauer die Abstimmung der emittierten Wellenlängen auf die photoelektrischen Eigenschaften des katalytischen Materials, desto größer ist die resultierende Menge der gewünschten Reaktionsprodukte. Eine besonders hohe Ausbeute an Reaktionsprodukten, insbesondere im Verhältnis zur eingesetzten Energie, kann deshalb durch die Einstellbarkeit der mindestens einen Strahlungsquelleneinheit bewirkt werden. Die katalytische Reaktion kann mit dem vorgeschlagenen Geruchsfilter insbesondere auch dann zuverlässig bewirkt werden, wenn sich Änderungen des Abstrahlverhaltens der Strahlungsquellen und/oder der photoelektrischen Eigenschaften des katalytischen Materials aufgrund von Alterungseffekten ergeben. Der Abbau von Geruchsstoffen kann somit über einen langen Zeitraum zuverlässig erfolgen. Die Standzeit des Geruchsfilters ist erhöht, wodurch der Geruchsfilter besonders wirtschaftlich im Betrieb ist.

Darunter, dass die mindestens eine Strahlungsquelleneinheit hinsichtlich ihres Emissionsspektrums unterschiedlich einstellbar ist, wird verstanden, dass diese zwischen mindestens zwei Emissionszuständen schaltbar ist, welche sich hinsichtlich der Wellenlängenverteilung der emittierte Strahlung und/oder der Intensität der jeweiligen emittierten Wellenlängen unterscheiden. Unterschiede in der Wellenlängenverteilung umfassen vorzugsweise unterschiedliche Bandbreiten der emittierten Strahlung und/oder unterschiedliche Intensitätsverhältnisse zwischen den jeweiligen, insbesondere zwischen mindestens zwei, emittierten Wellenlängen, insbesondere Unterschiede hinsichtlich der Wellenlänge höchster Intensität. Vorzugsweise ist die mindestens eine Strahlungsquelleneinheit mittels eines Steuersignals hinsichtlich ihres Emissionsspektrums einstellbar. Hierzu kann die Strahlungsquelleneinheit in Signalverbindung mit einer Steuereinrichtung, insbesondere einem Steuercomputer, stehen. Das Steuersignal ist vorzugsweise ein elektrisches Signal. Die mindestens eine Strahlungsquelleneinheit ist hinsichtlich ihres Emissionsspektrums vorzugsweise unabhängig von einer der Strahlungsquelleneinheit zugeführten und/oder einer von der mindestens einen Strahlungsquelleneinheit abgestrahlten Leistung und/oder unabhängig von einer Temperatur der mindestens einen Strahlungsquelleneinheit einstellbar. In den mindestens zwei unterschiedlichen Emissionszuständen wird jeweils Strahlung zum Bewirken der katalytischen Reaktion emittiert. Ein Zustand, in dem die Strahlungsquelleneinheit keine Strahlung emittiert ist kein Emissionszustand. Die Wellenlängenverteilung kann derart gestaltet sein, dass nur eine einzige Wellenlänge emittiert wird.

Die mindestens zwei Emissionszustände können sich hinsichtlich ihrer Bandbreite der Wellenlängen der emittierten Strahlung und/oder hinsichtlich der emittierten Wellenlänge maximaler Intensität unterscheiden. Vorzugsweise unterscheiden sich die Bandbreiten der mindestens zwei Emissionszustände um mindestens 10 %, insbesondere mindestens 50 %, insbesondere mindestens 100 %, insbesondere mindestens 200 %. Die Intensitätsmaxima der in den mindestens zwei Emissionszuständen emittierten Strahlung sind vorzugsweise mindestens 10 nm, insbesondere mindestens 20 nm, insbesondere mindestens 50 nm, insbesondere mindestens 75 nm, voneinander beabstandet und/oder beabstandet einstellbar. Vorteilhaft wird hierdurch erreicht, dass das mit den mindestens zwei Emissionszuständen insgesamt emittierte Wellenlängenspektrum breitbandig und/oder sowohl breitbandig als auch schmalbandig einstellbar ist. Der Abbau von Geruchsstoffen erfolgt somit zuverlässig und energieeffizient.

Gemäß einem Aspekt der Erfindung weist der Geruchsfilter eine reflektierende Schicht auf. Die reflektierende Schicht kann eine spiegelnde Schicht und/oder eine weiße Schicht sein. Vorzugsweise ist die reflektierende Schicht zum Reflektieren von mindestens 30 %, insbesondere mindestens 50 %, insbesondere mindestens 75 %, insbesondere mindestens 90 %, insbesondere mindestens 95 %, der unter einem 90°-Winkel auf die Schicht auftreffenden, von der mindestens einen Strahlungsquelleneinheit bereitgestellten Strahlungsleistung ausgebildet. Die reflektierende Schicht kann beispielsweise an einem Gehäuse des Geruchsfilters angeordnet sein. Vorzugsweise ist mindestens eine Innenseite, insbesondere sind mindestens 50 %, insbesondere mindestens 70 %, insbesondere mindestens 90 %, der Innenseiten des Gehäuses, mit der reflektierenden Schicht ausgebildet. Vorteilhaft wird hierdurch erreicht, dass das Bestrahlen des katalytischen Materials mit der elektromagnetischen Strahlung besonders energieeffizient erfolgen kann.

Gemäß einem weiteren Aspekt der Erfindung kann die mindestens eine Strahlungsquelleneinheit zum Bereitstellen von Strahlung zum Zerstören von Bakterien und/oder Viren, insbesondere von Corona-Viren ausgebildet sein. Die mindestens eine Strahlungsquelleneinheit kann insbesondere zum Bereitstellen von UV-Strahlung, insbesondere von UV-A und/oder UV-B und/oder UV-C-Strahlung, ausgebildet sein. Vorzugsweise ist die mindestens eine Strahlungsquelleneinheit zum Bestrahlen des Trägerelements und/oder eines Gehäuses des Geruchsfilters mit dieser Strahlung ausgebildet. Die mindestens eine Strahlungsquelleneinheit kann eine eigene Gruppe von Strahlungsquellen aufweisen, welche nicht zum Bewirken der katalytischen Reaktion, sondern zum Zerstören der Bakterien und/oder Viren, insbesondere durch direkte und/oder indirekte Einstrahlung auf diese, ausgebildet ist. Diese Gruppe von Strahlungsquellen kann einer Gruppe von Strahlungsquellen zum Bewirken der katalytischen Reaktion in Hinblick auf die Hauptströmungsrichtung innerhalb des Geruchsfilters vorgeschaltet und/oder nachgeschaltet und/oder parallel zu diesen geschaltet sein. Die Ausbreitung von Keimen innerhalb des Geruchsfilters kann hierdurch zuverlässig verhindert werden. Ferner kann die von der Dunstabzugsvorrichtung abgesaugte Raumluft desinfiziert, insbesondere von Bakterien und/oder Viren, gereinigt werden.

Gemäß einem Aspekt der Erfindung liegt eine Länge des Geruchsfilters entlang der Hauptströmungsrichtung innerhalb des Geruchsfilters in einem Bereich von 200 mm bis 1000 mm, insbesondere von 300 mm bis 600 mm. Quer zu der Hauptströmungsrichtung liegt die Abmessung des Geruchsfilters vorzugsweise in einem Bereich von 50 mm bis 500 mm, insbesondere von 100 mm bis 400 mm.

Gemäß einem weiteren Aspekt der Erfindung kann das katalytische Material stoffschlüssig mit dem Trägerelement verbunden sein. Das katalytische Material kann in Form eines Pulvers, insbesondere vermischt mit einer Flüssigkeit, auf das Trägerelement aufgebraucht werden. Das Trägerelement kann über ein Bindemittel, insbesondere ein organisches und/oder ein anorganisches Bindemittel, oder bindemittelfrei mit dem katalytischen Material verbunden sein.

Gemäß einem Aspekt der Erfindung umfasst die mindestens eine Strahlungsquelleneinheit mindestens eine hinsichtlich ihres Emissionsspektrums unterschiedlich einstellbare und/oder mindestens zwei hinsichtlich ihrer Emissionsspektren unterschiedliche Strahlungsquellen. Die mindestens eine Strahlungsquelleneinheit kann mindestens eine nicht einstellbare Strahlungsquelle und einen einstellbaren Filter zum Filtern des von der mindestens einen Strahlungsquelle erzeugten Emissionsspektrums aufweisen. Auch hierdurch ist die Strahlungsquelleneinheit zwischen mindestens zwei Emissionszuständen schaltbar. Derartige Ausführungsformen der Strahlungsquelleneinheit ermöglichen die unterschiedliche Einstellbarkeit des Emissionsspektrums in besonders einfacher und robuster Weise.

Gemäß einem weiteren Aspekt der Erfindung umfasst der Geruchsfilter mindestens drei, insbesondere mindestens vier, insbesondere mindestens fünf, insbesondere mindestens zehn, insbesondere mindestens zwanzig, insbesondere mindestens fünfzig, insbesondere mindestens einhundert, insbesondere mindestens fünfhundert, der Strahlungsquellen. Vorzugsweise sind mindestens drei, insbesondere mindestens vier, insbesondere mindestens fünf, insbesondere mindestens zehn, der Strahlungsquellen hinsichtlich ihrer Emissionsspektren unterschiedlich oder voneinander unterschiedlich einstellbar. Hierdurch kann das Emissionsspektrum der auf das katalytische Material einwirkenden elektromagnetischen Strahlung noch gezielter eingestellt werden.

Vorzugsweise liegen mindestens 60 %, insbesondere mindestens 90 %, insbesondere mindestens 95 % der emittierten elektromagnetischen Strahlungsleistung in einem Wellenlängenbereich von 300 nm bis 500 nm, insbesondere von 320 nm bis 480 nm, insbesondere von 380 nm bis 480 nm, insbesondere von 380 nm bis 410 nm, und/oder von 360 nm bis 390 nm, insbesondere von 365 nm bis 385 nm. Vorzugsweise werden mindestens 60 % der elektromagnetischen Strahlungsleistung in einem Wellenlängenbereich von 360 nm bis 370 nm emittiert. Maximal 40 % der elektromagnetischen Strahlungsleistung werden vorzugsweise in einem Wellenlängenbereich von 380 nm bis 390 nm emittiert. Insbesondere können 1 % bis 80 %, insbesondere 5 % bis 50 %, insbesondere 10 % bis 30 %, der emittierten elektromagnetischen Strahlungsleistung in einem Wellenlängenbereich von 100 nm bis 280 nm emittiert werden. Das mindestens eine katalytische Material ist vorzugsweise ein photokatalytisches Material. Vorzugsweise beträgt eine 3-dB-Bandbreite des insgesamt emittierten Strahlungsspektrums mindestens 20 nm, insbesondere mindestens 50 nm, insbesondere mindestens 100 nm. Eine insgesamt von der mindestens einen Strahlungsquelleneinheit emittierte Leistungsdichte beträgt vorzugsweise mindestens 1 W/m², insbesondere mindestens 5 W/m², insbesondere mindestens 10 W/m², insbesondere mindestens 20 W/m². Hierdurch kann der Abbau der Geruchsstoffe besonders zuverlässig und leistungsstark erfolgen.

Das Trägerelement kann ein oder mehrere katalytische Materialien umfassen. Insbesondere kann das Trägerelement vollständig aus dem katalytischen Material bestehen. Das katalytische Material kann Titanoxid, insbesondere Titandioxid, umfassen und/oder daraus bestehen. Das katalytische Material kann auch Zirkoniumoxid und/oder Galliumoxid und/oder Tantaloxid und/oder Nickeloxid und/oder Zinnoxid und/oder Nioboxid und/oder Zinkoxid und/oder Ceroxid und/oder Indiumoxid und/oder Wolframoxid und/oder Eisenoxid und/oder Kupferoxid umfassen und/oder daraus bestehen.

Gemäß einem Aspekt der Erfindung beträgt eine Bauhöhe des Geruchsfilters, insbesondere dessen Gesamtabmessung in vertikaler Richtung, maximal 150 mm, insbesondere maximal 120 mm, insbesondere maximal 100 mm, insbesondere maximal 80 mm. Hierdurch kann der Geruchsfilter besonders platzsparend an einem Kochfeld, insbesondere damit zu einer Montageeinheit kombiniert, und/oder in einem Küchenunterschrank, insbesondere in einem Sockelbereich eines Küchenunterschranks, angeordnet werden. Der in dem Küchenunterschrank zur Verfügung stehende Bauraum kann somit weitestgehend als Stauraum erhalten bleiben.

Gemäß einem Aspekt der Erfindung umfasst der Geruchsfilter einen Strömungskanal zum Leiten eines Luftstroms, insbesondere eines Kochdunststroms. Der Strömungskanal ist vorzugsweise bis zu einem Druck von mindestens 300 Pa druckbeständig, insbesondere luftdicht.

Gemäß einem weiteren Aspekt der Erfindung umfasst der Geruchsfilter mindestens einen Turbulenzerzeuger zum Erzeugen von turbulenter Strömung im Bereich des mindestens einen Trägerelements. Der Turbulenzerzeuger kann mindestens ein, insbesondere schräg zu der Strömung orientiertes und/oder wirbelerzeugendes, Leitelement und/oder einen Statikmischer umfassen.

Der Turbulenzerzeuger ist vorzugsweise stromaufwärts des mindestens einen Trägerelements angeordnet. Die somit erzeugte turbulente Strömung im Bereich des mindestens einen Trägerelements gewährleistet eine verbesserte Durchmischung der Produkte der katalytischen Reaktion mit den im Luftstrom geführten Geruchsstoffen. Die Geruchsstoffe können somit besonders effizient abgebaut werden.

Gemäß einem Aspekt der Erfindung weist der Geruchsfilter mindestens zwei, insbesondere mindestens drei, insbesondere mindestens fünf, insbesondere mindestens zehn der Trägerelemente auf. Die Trägerelemente können zur parallelen und/oder in Reihe geschalteten Umströmung im Strömungskanal angeordnet sein. Der Strömungskanal und/oder das mindestens eine Trägerelement können derart ausgebildet sein, dass der Luftstrom im Wesentlichen gerade oder gekrümmt, insbesondere bogenförmig und/oder mäanderförmig, durch den Geruchsfilter geleitet wird. Die gekrümmte Geruchsstromführung fördert eine intensive Durchmischung der Reaktionsprodukte mit den Geruchsstoffen. Bei einer geraden Luftstromführung weist der Geruchsfilter einen besonders geringen Strömungswiderstand auf.

Vorzugsweise ist mindestens eine der Strahlungsquellen als Glühlampe und/oder als Quecksilberdampflampe, insbesondere als Quecksilberdampf-Niederdrucklampe, ausgebildet. Derartige Strahlungsquellen sind besonders kostengünstig herstellbar.

Gemäß einem Aspekt der Erfindung ist mindestens eine der Strahlungsquellen als lichtemittierende Diode (= LED) ausgebildet. Vorzugsweise sind sämtliche der Strahlungsquellen als LED ausgebildet. LEDs sind im Vergleich zu Glühlampen besonders langlebig. Eine Gesundheitsgefährdung durch Freisetzung von Quecksilberdampf kann durch die Verwendung der LED vermieden werden.

Vorzugsweise ist die mindestens eine LED zum Emittieren elektromagnetischer Strahlung, insbesondere von Licht, insbesondere von ultraviolettem Licht, ausgebildet. Vorzugsweise ist das Spektrum der emittierten Strahlung einstellbar. Insbesondere können eine Bandbreite der Wellenlängen der emittierten Strahlung und/oder eine Wellenlänge, bei der eine Intensität der emittierten Strahlung maximal ist, einstellbar sein.

Vorzugsweise steht jede der LEDs in Signalverbindung mit einem LED-Treiber. Der jeweilige LED-Treiber kann dazu ausgebildet sein, die Intensität der erzeugten elektromagnetischen Strahlung und/oder die Wellenlängenverteilung der emittierten Strahlung anhand eines digitalen oder analogen Signals zu steuern. Der erforderliche Verkabelungsaufwand, insbesondere die Anzahl notwendiger Verbindungen zwischen den LEDs und einer Steuereinrichtung, kann hierdurch reduziert werden.

Gemäß einem Aspekt der Erfindung umfasst die Strahlungsquelleneinheit mindestens einen Strahlungsquellenträger zum Tragen der mindestens einen Strahlungsquelle. Vorzugsweise sind mehrere der Strahlungsquellen, insbesondere der LEDs, an einem Strahlungsquellenträger angebracht. Der Strahlungsquellenträger kann ein Gehäuse des Luftfilters und/oder eine Leiterplatte sein. Vorzugsweise sind die mehreren Strahlungsquellen beidseitig an dem mindestens einen Strahlungsquellenträger, insbesondere an der mindestens einen Leiterplatte, insbesondere einer zwischen zwei Trägerelementen angeordneten Leiterplatte, angeordnet.

Gemäß einem weiteren Aspekt der Erfindung umfasst der Geruchsfilter eine Vielzahl von LEDs, welche in einer rasterförmigen Anordnung, insbesondere an dem Strahlungsquellenträger, angeordnet sind. Unter der rasterförmigen Anordnung wird verstanden, dass jeweils eine Vielzahl von LEDs in den Kreuzungspunkten eines regelmäßigen Linienmusters, insbesondere eines Rautenmusters oder eines Rechteckmusters oder eines Sechseckmusters, angeordnet sind. Das Bestrahlen des mindestens einen Trägerelements kann somit besonders gleichmäßig erfolgen. Hierdurch ist ein über die Erstreckung des mindestens einen Trägerelements gleichverteilter Abbau der Geruchsstoffe ermöglicht. Alternativ können die LEDs, insbesondere entsprechend einer Verteilung der Strömungsgeschwindigkeit des zu reinigenden Luftstroms entlang des Trägerelements, mit einer variierenden Flächendichte angeordnet sein, zum Bestrahlen des katalytischen Materials mit einer über die Oberfläche veränderlichen Intensität. Beispielsweise kann die Strahlungsintensität in einem Bereich des katalytischen Materials mit geringer Strömungsgeschwindigkeit geringer sein, als in einem Bereich hoher Strömungsgeschwindigkeit.

Gemäß einem weiteren Aspekt der Erfindung ist die mindestens eine Strahlungsquelleneinheit zum Bestrahlen des katalytischen Materials an zwei einander gegenüberliegenden Hauptflächen des mindestens einen Trägerelements ausgebildet. Insbesondere können mindestens zwei der Strahlungsquellen zum Bestrahlen des katalytischen Materials an zwei einander gegenüberliegenden Hauptflächen des mindestens einen Trägerelements angeordnet sein. Hauptflächen weisen gegenüber Nebenflächen einen wesentlich größeren Flächeninhalt auf. Das mindestens eine Trägerelement ist vorzugsweise als dünnwandiger Körper ausgebildet. Die sich senkrecht zur Dickenrichtung erstreckenden Flächen werden als Hauptflächen bezeichnet. Vorzugsweise sind die mindestens zwei Strahlungsquellen hinsichtlich des mindestens einen Trägerelements einander gegenüberliegend angeordnet. Im Falle mehrerer der Trägerelemente ist vorzugsweise mindestens eine Strahlungsquelle zwischen je zwei der Trägerelemente angeordnet. Vorzugsweise überlappen die mehreren Trägerelemente einander und/oder die mindestens zwei Strahlungsquellen in einer Richtung senkrecht zu der Hauptströmungsrichtung.

Gemäß einem Aspekt der Erfindung sind zumindest einzelne oder sämtliche der Strahlungsquellen außerhalb einer von den mindestens zwei Trägerelementen aufgespannten, kleinsten konvexen Einhüllenden angeordnet. Eine Hauptabstrahlrichtung kann hierbei parallel zu den Hauptflächen der Trägerelemente orientiert sein. Eine Hauptabstrahlrichtung der zwischen den Trägerelementen angeordneten mindestens einen Strahlungsquelle ist vorzugsweise senkrecht zur jeweiligen Hauptfläche des Trägerelements orientiert. Insbesondere kann die mindestens eine Strahlungsquelle an einer parallel zu dem mindestens einen Trägerelement orientierten Wandung des Gehäuses und/oder an einer senkrecht zu dem mindestens einen Trägerelement orientierten Wandung des Gehäuses angebracht ein.

Gemäß einem Aspekt der Erfindung umfasst der Geruchsfilter mindestens einen Sensor zum Erfassen mindestens eines Messwerts, welcher mit einer Geruchsintensität und/oder einer Feuchtigkeit und/oder einer Temperatur und/oder einem Massenstrom des zu behandelnden Luftstroms korreliert. Zum Erfassen des mit dem Massenstrom korrelierenden Messwerts kann der Sensor als Drucksensor, insbesondere als Staudrucksensor, insbesondere als Pitotrohr, und/oder als Flow-Detection-Sensor ausgebildet sein. Der Sensor zum Erfassen eines mit einer Geruchsintensität korrelierenden Messwerts kann als Gassensor, insbesondere als Metalloxid-Gassensor und/oder als Polymer-Gassensor und/oder als Oberflächenwellen-Sensor, ausgebildet sein. Vorzugsweise steht der mindestens eine Sensor mit der mindestens einen Strahlungsquelleneinheit, insbesondere der mindestens einen Strahlungsquelle, zum Einstellen des Emissionsspektrums der emittierten Strahlung anhand des Messwertes in Signalverbindung.

Gemäß einem, insbesondere unabhängigen, weiteren Aspekt der Erfindung weist der Geruchsfilter eine Steuereinrichtung zum Steuern zwischen mindestens drei unterschiedlichen Intensitäten und/oder zwischen unterschiedlichen Wellenlängenverteilungen der mittels der mindestens einen Strahlungsquelleneinheit erzeugten elektromagnetischen Strahlung auf. Die Steuereinrichtung steht vorzugsweise in Signalverbindung mit dem mindestens einen Sensor. Die Steuereinrichtung kann zum Steuern der Intensitäten und/oder der Wellenlängenverteilung anhand des mindestens einen Messwerts des mindestens einen Sensors ausgebildet sein. Vorzugsweise ist die Steuereinrichtung dazu ausgebildet, die mindestens eine Strahlungsquelleneinheit zwischen einem deaktivierten Zustand, einem Zustand maximaler Strahlungsintensität und mindestens einem Zustand einer dazwischen liegenden Strahlungsintensität zu betreiben. Vorzugsweise ist die emittierte Strahlungsintensität mittels der Steuereinrichtung stufenlos steuerbar. Vorzugsweise erfolgt das Bestrahlen des katalytischen Materials kontinuierlich. Alternativ kann das Bestrahlen, insbesondere zur Intensitätssteuerung, diskontinuierlich, insbesondere gepulst, insbesondere mittels Pulsweitenmodulation, erfolgen. Eine Pulsfrequenz beträgt vorzugsweise mindestens 10 Hz, insbesondere mindestens 1 kHz. Die Steuerung der Intensität der erzeugten elektromagnetischen Strahlung ermöglicht die Reduktion der Belastung der Umgebung mit den Produkten der katalytischen Reaktion bei gleichzeitig ausreichendem Abbau von Geruchsstoffen. Der Geruchsfilter kann somit besonders energieeffizient und umweltfreundlich betrieben werden.

Gemäß einem weiteren Aspekt der Erfindung weist der Geruchsfilter mindestens zwei Gruppen von Strahlungsquellen auf, wobei jede der Gruppen mehrere, insbesondere hinsichtlich ihrer Emissionsspektren gleichartige, Strahlungsquellen umfasst und wobei sämtliche der Strahlungsquellen der jeweiligen Gruppe nur gemeinsam ansteuerbar sind. Der erforderliche Steueraufwand kann somit reduziert werden. Insbesondere bei einer großen Anzahl an Strahlungsquellen kann die Verschaltung der Strahlungsquellen besonders einfach und wirtschaftlich erfolgen.

Gemäß einem weiteren Aspekt der Erfindung sind mittels der Steuereinrichtung mehrere, hinsichtlich ihrer Emissionsspektren unterschiedliche Strahlungsquellen, insbesondere Gruppen von Strahlungsquellen, gleichzeitig oder wechselweise aktivierbar.

Gemäß einem weiteren Aspekt der Erfindung steht die Steuereinrichtung zum Steuern der Intensität und/oder der Wellenlängenverteilung anhand des mindestens einen Messwerts mit dem mindestens einen Sensor in Signalverbindung. Die Steuereinrichtung kann zum Regeln auf einen bestimmten Sollwert ausgebildet sein. Insbesondere kann die Steuereinrichtung zum Regeln der Intensität und/oder der Wellenlängenverteilung anhand mindestens eines mit einer Temperatur und/oder einer Geruchsintensität und/oder einer Feuchtigkeit des Kochdunststroms korrelierenden Messwerts ausgebildet sein. Der mindestens eine Sensor kann hierzu an einem stromabwärtigen Ende des Geruchsfilters angeordnet sein. Vorzugweise erfolgt das Regeln auf einem voreingestellten oder vom Benutzer, insbesondere über eine Benutzerschnittstelle, einstellbaren Sollwert.

Gemäß einem weiteren Aspekt der Erfindung umfasst der Geruchsfilter einen Strömungskanal, welcher eine Hauptströmungsrichtung für einen zu behandelnden Luftstrom vorgibt, wobei die mehreren Trägerelemente im Wesentlichen parallel zueinander und/oder senkrecht zu der Hauptströmungsrichtung einander überlappend angeordnet sind. Vorzugsweise wird der Luftstrom geradlinig durch den Geruchsfilter geführt. Dadurch, dass die Trägerelemente parallel zueinander orientiert und senkrecht zu der Hauptströmungsrichtung einander überlappend angeordnet sind, gelangt der Luftstrom mit einer besonders großen Oberfläche des katalytischen Materials in Kontakt. Alternativ kann der Luftstrom mäanderförmig an den parallel zueinander orientierten und senkrecht zu der Hauptströmungsrichtung einander überlappend angeordneten Trägerelementen vorbeigeführt werden. Hieraus resultiert eine besonders lange Kontaktdauer zwischen dem Luftstrom und dem katalytischen Material. Die Geruchsstoffe können somit besonders zuverlässig abgebaut werden.

Gemäß einem weiteren Aspekt der Erfindung ist das mindestens eine Trägerelement gekrümmt, insbesondere spiralförmig, ausgebildet. Hierdurch steht eine besonders große Oberfläche zum Zusammenwirken mit dem geführten Luftstrom bei einem gleichzeitig geringen Bauraumbedarf zur Verfügung.

Gemäß einem weiteren Aspekt der Erfindung weist das Trägerelement ein plattenförmiges und/oder ein fluiddurchlässiges und/oder ein poröses und/oder ein faserhaltiges und/oder ein gitterförmiges Substrat auf. Beispielsweise kann das Trägerelement ein Schaummaterial, insbesondere einen offenporigen Schaum, umfassen.

Gemäß einem Aspekt der Erfindung weist das Trägerelement ein, insbesondere dreidimensionales, Gewirke und/oder Gewebe und/oder Gestricke auf. Das Trägerelement kann daraus bestehen. Das Trägerelement ist dabei vorzugsweise plattenförmig ausgebildet. Insbesondere kann das Trägerelement eine Kernschicht und mindestens eine Deckschicht, insbesondere zwei einander gegenüberliegend an der Kernschicht angeordnete Deckschichten, aufweisen. Die mindestens eine Deckschicht und/oder die Kernschicht sind vorzugsweise parallel zu einer Hauptfläche des plattenförmigen Trägerelements angeordnet. Als Hauptflächen werden die beiden größten Flächen des plattenförmigen Trägerelements bezeichnet.

Die Deckschichten sind vorzugsweise für die von der mindestens einen Strahlungsquelleneinheit bereitgestellten elektromagnetischen Strahlungsleistung, zumindest teilweise, insbesondere zu mindestens 10 %, insbesondere zu mindestens 30 %, insbesondere zu mindestens 50 %, insbesondere zu mindestens 75 %, insbesondere vollständig, durchlässig. Die Deckschichten können hierzu einen für die elektromagnetische Strahlung durchlässigen Kunststoff und/oder Glas aufweisen und/oder Materialücken, insbesondere eine weitmaschiges Gewirke und/oder Gewebe und/oder Gestricke, aufweisen.

Gemäß einem Aspekt der Erfindung sind die mindestens eine Deckschicht und/oder die Kernschicht luftdurchlässig, insbesondere von Kochdünsten durchströmbar. Die mindestens eine Deckschicht kann auch bereichsweise oder vollständig luftdicht ausgebildet sein. Vorzugsweise ist zwischen zwei, insbesondere parallel zueinander orientierten, Deckschichten mindestens ein Träger-Strömungskanal zum Leiten von Luft, insbesondere von Kochdünsten, ausgebildet. Vorzugsweise weist die mindestens eine Deckschicht einen höheren Durchströmungswiderstand auf als die Kernschicht. Hierdurch wird vorteilhaft erreicht, dass Kochdünste zwischen den Deckschichten, insbesondere in der Kernschicht, geleitet werden können.

Vorzugsweise weist das Trägerelement einen Trägerrahmen auf. Der Trägerrahmen kann die Formstabilität, insbesondere des Trägerelements mit der mindestens einen Deckschicht und der Kernschicht, erhöhen. Der Trägerrahmen kann auch zum Befestigen des Trägerelements an einem Gehäuse ausgebildet sein. Der Trägerrahmen kann mindestens eine Zuströmöffnung und mindestens eine Abströmöffnung aufweisen. Vorzugsweise ist die Zuströmöffnung mit dem Strömungskanal der Dunstabzugsvorrichtung fluidleitend verbunden. Die mindestens eine Abströmöffnung kann an einer Schmalseite und/oder an einer Hauptseite, insbesondere eine Hauptfläche des Trägerelements überlappend, angeordnet sein.

Das Trägerelement, insbesondere die mindestens eine Deckschicht und/oder die Kernschicht können Fasern aufweisen, insbesondere aus Fasern bestehen. Die Fasern sind vorzugsweise beständig gegenüber UV-Licht. Die Fasern können Kunststoff, insbesondere Polyamid und/oder Polyester, und/oder Glas und/oder Metall umfassen, insbesondere daraus bestehen.

Das dreidimensionale Gewebe, insbesondere die mindestens eine Deckschicht und/oder die Kernschicht, insbesondere die Fasern, können zumindest bereichsweise, insbesondere vollständig, mit dem katalytischen Material beschichtet sein.

Die Hauptabmessung eines Querschnitts der Fasern liegt vorzugsweise in einem Bereich von 0,05 bis 1 mm, insbesondere von 0,1 bis 0,5 mm. Ein Abstand zwischen zwei einander gegenüberliegenden Deckschichten und/oder eine Dicke der Kernschicht liegt vorzugsweise in einem Bereich von 5 mm bis 100 mm, insbesondere von 10 mm bis 50 mm. Vorteilhaft wird hierdurch erreicht, dass die Luft besonders effizient durch den zwischen den Deckschichten gebildeten Träger-Strömungskanal geleitet werden kann.

Die mindestens eine Deckschicht und/oder die Kernschicht können eine Netzstruktur aufweisen. Vorzugsweise sind mindestens 50 %, insbesondere mindestens 75 %, insbesondere mindestens 90 %, insbesondere 100 %, der Fasern der Kernschicht in einem Winkelbereich von 75° bis 105°, insbesondere von 80° bis 100°, zu der mindestens einen Deckschicht orientiert. Die Kernschicht kann faserfreie Bereiche, insbesondere zur Ausbildung des Träger-Strömungskanals, aufweisen. Hierzu können die Fasern beispielsweise in einer Ebene entlang des mindestens einen Träger-Strömungskanals, insbesondere wandförmig, angeordnet sein. Vorzugsweise weisen die mindestens eine Deckschicht und/oder die Kernschicht stachelartige und/oder schlaufenartige, insbesondere von der mindestens einen Deckschicht abstehende, Fasern, insbesondere zur Oberflächenvergrößerung, auf.

Die Fasern können einen runden oder polygonalen Querschnitt aufweisen. Sie können auch einen Querschnitt in Form eines konkaven Polygons aufweisen. Hierdurch kann die Oberfläche der Fasern vergrößert werden. Der Querschnitt der Fasern kann insbesondere sternförmig, kreuzförmig oder kleeblattförmig sein.

Das Trägerelement ist vorzugsweise gegenüber der elektromagnetischen Strahlung, insbesondere gegenüber der UV-Strahlung, versiegelt, insbesondere mit einer Schutzschicht, insbesondere einem Schutzlack, beschichtet.

Gemäß einem Aspekt der Erfindung ist mindestens ein Trägerelement durchströmbar, insbesondere in dem Gehäuse des Geruchsfilters, angeordnet. Vorzugsweise ist das mindestens eine Trägerelement in dem von dem Geruchsfilter gebildeten Strömungskanalabschnitt derart angeordnet, dass es dessen Strömungsquerschnitt vollständig überspannt. Somit kann ein Durchströmen des Trägerelements beim Durchströmen des Geruchsfilters erzwungen werden. Mehrere, insbesondere mindestens zwei, insbesondere mindestens drei, insbesondere mindestens vier, insbesondere mindestens sechs, insbesondere mindestens acht, der Trägerelemente können plattenförmig und/oder zickzack-förmig in dem Gehäuse angeordnet sein. Vorzugsweise sind mehrere der Trägerelemente in Hinblick auf die Durchströmung des Geruchsfilters parallel und/oder in Serie geschalten.

Gemäß einem weiteren Aspekt der Erfindung ist das Trägerelement, insbesondere das plattenförmige Substrat, gewellt und/oder gefaltet, insbesondere plissiert, ausgebildet. Hierdurch kann eine besonders große Oberfläche des katalytischen Materials bei einem gleichzeitig geringen Bauraumbedarf bereitgestellt werden. Insbesondere ist das plissierte Trägerelement in einfacher Weise, insbesondere ohne Abschattungsbereiche, bestrahlbar. Vorzugsweise überlappen mindestens zwei der plissierten Trägerelemente einander entlang der Hauptströmungsrichtung. Insbesondere können hierzu die Falten der Trägerelemente ineinandergreifend angeordnet sein. Die von dem zu reinigenden Luftstrom benetzte Oberfläche des katalytischen Materials kann bei einem gegebenen Bauraum des Geruchsfilters somit besonders groß sein.

Gemäß einem weiteren Aspekt der Erfindung umfasst der Geruchsfilter einen Strömungskanal, welcher eine Hauptströmungsrichtung für einen zu behandelnden Luftstrom bestimmt, wobei die Wellung und/oder die Falten des Substrats im Wesentlichen senkrecht zu der Hauptströmungsrichtung orientiert sind. Durch die senkrecht zu der Hauptströmungsrichtung orientierte Wellung und/oder Faltung des Substrats kommt es zur Verwirbelung der Strömung, wodurch eine besonders gute Durchmischung der Produkte der katalytischen Reaktion mit den Geruchsstoffen gewährleistet wird.

Die Wellung und/oder die Faltung des Trägerelements, insbesondere des Substrats, kann parallel zu der Hauptströmungsrichtung orientiert sein. Ein Strömungswiderstand des Geruchsfilters ist somit besonders gering und der Geruchsfilter kann energieeffizient betrieben werden.

Gemäß einem weiteren Aspekt der Erfindung besteht das Trägerelement und/oder ein Gehäuse des Geruchsfilters aus einem gegenüber UV-Licht beständigen Material und/oder einem Metallmaterial und/oder einem Keramikmaterial und/oder einem Kunststoffmaterial. Das Keramikmaterial kann Glas und/oder Karbon umfassen. Das Metallmaterial kann Aluminium und/oder Edelstahl und/oder eine Nickel-Eisen-Verbindung umfassen. Das Kunststoffmaterial kann Polyethylen (PE) und/oder Acrylnitril-Butadien-Styrol (ABS) umfassen. Derartige Materialien sind besonders korrosionsbeständig, insbesondere beständig gegenüber den Produkten der katalytischen Reaktion.

Das Trägerelement besteht vorzugsweise aus temperaturfestem Material, insbesondere einem bei Temperaturen bis mindestens 50° C, insbesondere bis mindestens 75° C, insbesondere bis mindestens 100° C, beständigem Material. Vorzugsweise ist das Material des Trägerelements gegenüber relativer Luftfeuchtigkeit bis mindestens 90 % beständig.

Gemäß einem weiteren Aspekt der Erfindung ist das mindestens eine Trägerelement mit dem katalytischen Material elektrostatisch beschichtet. Mittels der elektrostatischen Beschichtung können besonders geringe Beschichtungsdicken erzielt werden, wodurch das katalytische Material sparsam eingesetzt werden kann. Hierdurch wird eine besonders wirtschaftliche Herstellung des Geruchsfilters gewährleistet. Insbesondere kann das mindestens eine Trägerelement mit dem katalytischen Material in einem Pulverbeschichtungsverfahren beschichtet sein.

Alternativ kann das katalytische Material durch Tauchbeschichten und/oder Spritzen und/oder Rotationsbeschichten und/oder Bedrucken, insbesondere in einem Offsetdruckverfahren, und/oder durch Walzverfahren und/oder durch Streichverfahren auf das Trägerelement aufgebracht sein.

Gemäß einem weiteren Aspekt der Erfindung umfasst der Strömungskanal mindestens ein Kanalanschlussmittel zum, insbesondere luftdichten, Anschluss weiterer Kanalelemente des Abluftkanals. Insbesondere kann der Strömungskanal hierzu ein Dichtmittel, insbesondere einen Dichtring und/oder eine Dichtfläche aufweisen.

Vorzugsweise ist der Geruchsfilter als separate Einheit, insbesondere modular, insbesondere mit einem eigenen Gehäuse und/oder mindestens einem Kanalanschlussmittel zum Verbinden mit Kanalelementen und/oder mit mindestens einem Schnittstellenmittel zum Übertragen von Steuerinformationen und/oder elektrischer Leistung, ausgebildet. Hierdurch ist der Einsatzbereich des Geruchsfilters vergrößert. Der Geruchsfilter kann somit besonderes flexibel an eine Dunstabzugsvorrichtung zum Abzug von Kochdünsten oberhalb eines Kochfelds und/oder aus einem Gargerät, insbesondere einen Ofen, angeschlossen oder darin verbaut werden.

Eine weitere Aufgabe der Erfindung besteht darin, eine Dunstabzugsvorrichtung zu verbessern.

Diese Aufgabe wird durch eine Dunstabzugsvorrichtung mit einem Abluftkanal zum Leiten eines Luftstroms, mindestens einem an dem Abluftkanal angeschlossenen Abzugslüfter zum Fördern des Luftstroms und mindestens einem an den Abluftkanal angeschlossenen Geruchsfilter gemäß der vorstehenden Beschreibung gelöst. Die Vorteile der erfindungsgemäßen Dunstabzugsvorrichtung entsprechen den Vorteilen des vorstehend beschriebenen Geruchsfilters. Der Geruchsfilter kann in einem Unterdruck-Kanalabschnitt und/oder in einem Überdruck-Kanalabschnitt des Abluftkanals angeordnet sein. Der Abluftkanal erstreckt sich zwischen einer Einströmöffnung, über welche die Kochdünste angesaugt werden, und einer Ausströmöffnung, über welche der gereinigte Luftstrom aus dem Abluftkanal in die Umgebung austritt. Eine Bauhöhe der Dunstabzugsvorrichtung zwischen einer Oberseite der Einströmöffnung und einer Unterseite des Geruchsfilters beträgt vorzugsweise maximal 300 mm, insbesondere maximal 240 mm, insbesondere maximal 200 mm, insbesondere maximal 150 mm. Insbesondere kann der Geruchsfilter mit dem Abluftkanal und dem mindestens einen Abzugslüfter zu einer Montageeinheit kombiniert sein. Der Einbau der Dunstabzugsvorrichtung in eine Küche, insbesondere einen Küchenunterschrank, kann somit besonders wirtschaftlich erfolgen. Aufgrund der geringen Bauhöhe kann ein Raum unterhalb der Einströmöffnung weitestgehend als Stauraum erhalten bleiben.

Gemäß einem Aspekt der Erfindung handelt es sich bei der Dunstabzugsvorrichtung um eine Vorrichtung zum Abzug von Kochdünsten aus einem Bereich oberhalb eines Kochfeldes, insbesondere in Richtung nach unten, insbesondere einen Kochfeldabzug, und/oder eine Vorrichtung zum Abzug von Kochdünsten aus einem Gargerät, insbesondere einem Ofen. Die Dunstabzugsvorrichtung kann zum Umluftbetrieb und/oder zum Abluftbtrieb ausgebildet sein, insbesondere zum Wechsel zwischen diesen Betriebszuständen.

Gemäß einem weiteren Aspekt der Erfindung steht die Steuereinrichtung in Signalverbindung mit einer Lüftersteuerung zum Steuern des mindestens einen Abzugslüfters. Die Steuereinrichtung ist vorzugsweise dazu ausgebildet, die Intensität und/oder die Wellenlängenverteilung der mindestens einen Strahlungsquelleneinheit anhand eines Signals der Lüftersteuerung, insbesondere anhand einer Leitungseinstellung, insbesondere anhand eines momentanen und/oder zurückliegenden Leistungsniveaus, des mindestens einen Abzugslüfters, einzustellen.

Es ist eine weitere Aufgabe der Erfindung, ein Kochfeldsystem zu verbessern.

Diese Aufgabe wird durch ein Kochfeldsystem mit einem Kochfeld zum Erwärmen von Kochgut und einer Dunstabzugsvorrichtung gemäß der vorstehenden Beschreibung gelöst. Vorzugsweise liegt das Kochfeldsystem als Montageeinheit vor. Das Kochfeldsystem kann somit besonders wirtschaftlich und zeiteffizient verbaut werden.

Ein unabhängiger Aspekt der Erfindung betrifft einen Geruchsfilter für eine Dunstabzugsvorrichtung, aufweisend mindestens ein Trägerelement mit einem katalytischen Material und mindestens eine Strahlungsquelleneinheit zum Bestrahlen des katalytischen Materials mit elektromagnetischer Strahlung zum Bewirken einer katalytischen Reaktion zum Abbau von Geruchsstoffen. Die Vorteile des erfindungsgemäßen Geruchsfilters entsprechen den Vorteilen des vorstehend beschriebenen Geruchsfilters. Insbesondere kann dieser mit den Merkmalen des vorstehend beschriebenen Geruchsfilters weitergebildet werden.

Weitere Merkmale, Vorteile und Details des Kochfeldsystems, der Dunstabzugsvorrichtung und des Geruchsfilters sind nachfolgend anhand von mehreren Ausführungsbeispielen beschrieben. Es zeigen:

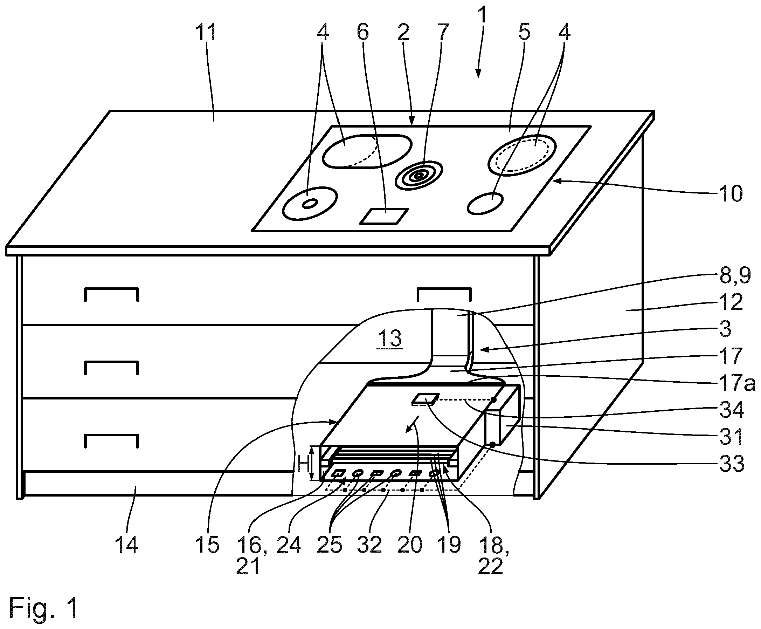

- Fig. 1: eine schematische Darstellung eines in einem Küchenunterschrank angeordneten Kochfeldsystems mit einem Kochfeld zum Erwärmen von Kochgut und einer Dunstabzugsvorrichtung zum Abzug von Kochdünsten nach unten, wobei die Dunstabzugsvorrichtung aufweist einen Abluftkanal zum Leiten eines Luftstroms, einen an den Abluftkanal angeschlossenen Lüfter zum Fördern des Luftstroms und einen mit dem Abluftkanal verbundenen Geruchsfilter,

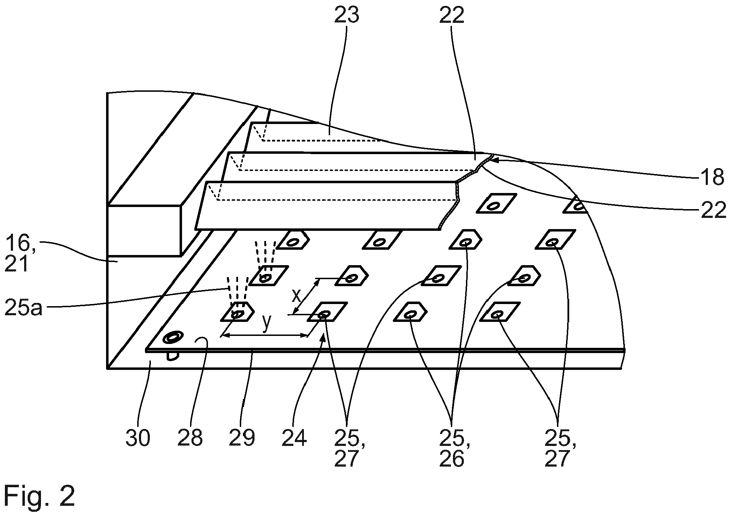

- Fig. 2: eine perspektivische Detaildarstellung des Geruchsfilters in Fig. 1 aufweisend ein Trägerelement mit einem katalytischen Material und einer Strahlungsquelleneinheit zum Bestrahlen des katalytischen Materials mit elektromagnetischer Strahlung, wobei sich eine erste Gruppe von Strahlungsquellen der Strahlungsquelleneinheit von einer zweiten Gruppe von Strahlungsquellen der Strahlungsquelleneinheit hinsichtlich ihres Emissionsspektrums unterscheidet,

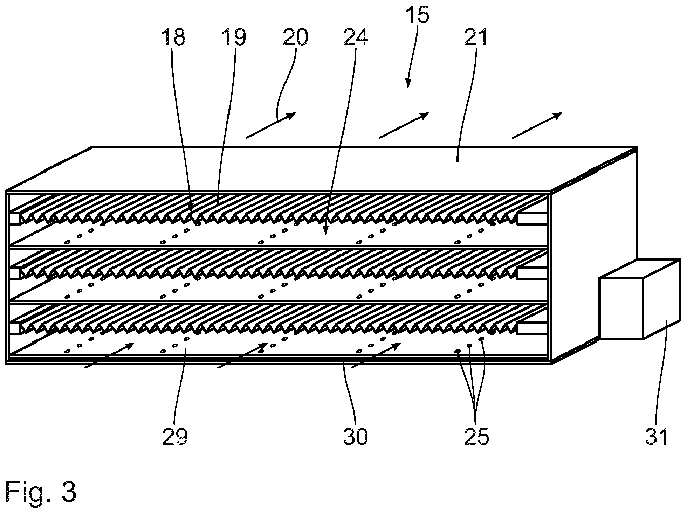

- Fig. 3: eine perspektivische Darstellung eines Geruchsfilters für eine Dunstabzugsvorrichtung oder ein Gargerät gemäß einem weiteren Ausführungsbeispiel, wobei der Geruchsfilter mehrere der Trägerelemente umfasst, welche einander senkrecht zu einer Strömungsrichtung überlappen und welche jeweils beidseitig an ihren Hauptflächen von der Strahlungsquelleneinheit bestrahlt werden,

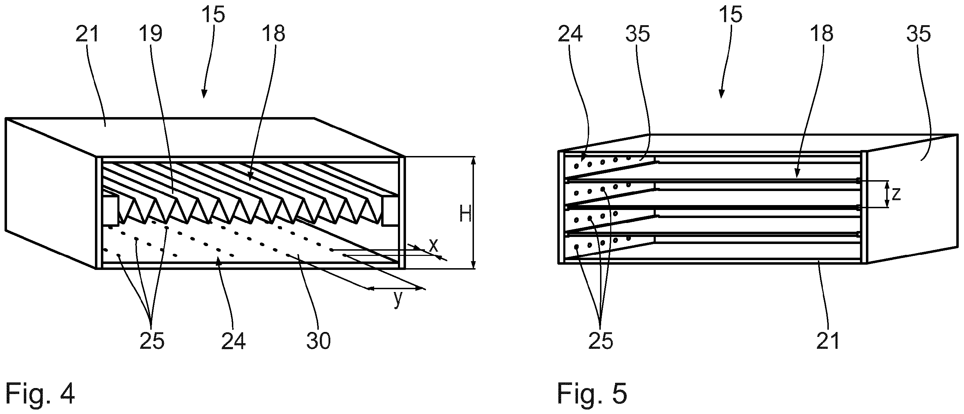

- Fig. 4: eine perspektivische Darstellung eines Geruchsfilters für eine Dunstabzugsvorrichtung gemäß einem weiteren Beispiel mit einem einzigen, plissierten Trägerelement, wobei eine Faltung des Trägerelements parallel zu einer Strömungsrichtung orientiert ist,
- Fig. 5: eine perspektivische Darstellung eines Geruchsfilters für eine Dunstabzugsvorrichtung gemäß einem weiteren Ausfuhrungsbeispiel mit mehreren der Trägerelemente, welche eben ausgebildet sind, und zwei Strahlungsquelleneinheiten, deren Hauptemissionsrichtung parallel zu den Trägerelementen und senkrecht zu der Hauptströmungsrichtung orientiert ist,

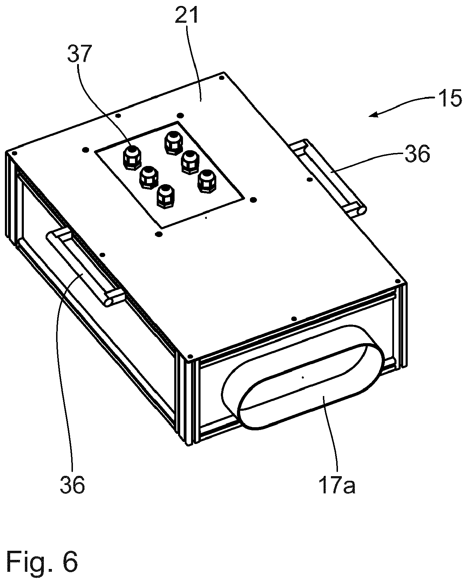

- Fig. 6: eine perspektivische Darstellung eines Geruchsfilters für eine Dunstabzugsvorrichtung gemäß einem weiteren Ausführungsbeispiel, wobei der Geruchsfilter modular ausgebildet ist und ein separates Gehäuse aufweist,

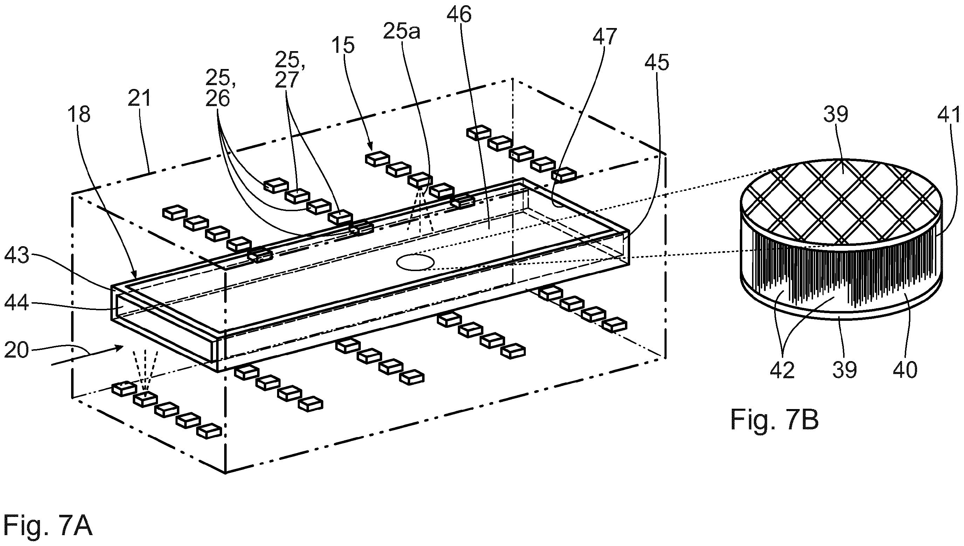

- Fig. 7A, 7B: eine perspektivische Darstellung eines Geruchsfilters für eine Dunstabzugsvorrichtung gemäß einem weiteren Ausführungsbeispiel, wobei das Trägerelement ein dreidimensionales Abstandsgewirk aufweist, und

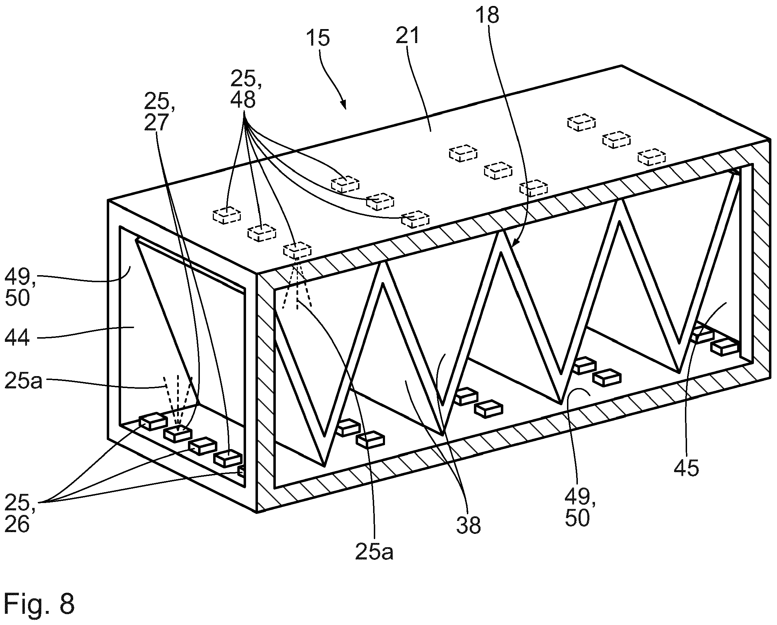

- Fig. 8: eine perspektivische Darstellung eines Geruchsfilters für eine Dunstabzugsvorrichtung gemäß einem weiteren Ausführungsbeispiel, wobei das Trägerelement in dem Gehäuse des Geruchsfilters zu seiner erzwungenen Durchströmung angeordnet ist.

Anhand der Fig. 1 und Fig. 2 ist ein erstes Ausführungsbeispiel eines Kochfeldsystems 1 mit einem Kochfeld 2 zum Erwärmen von Kochgut und einer Dunstabzugsvorrichtung 3 zum Abzug von Kochdünsten nach unten beschrieben. Das Kochfeld 2 umfasst vier Kochstellen 4. Die Kochstellen 4 sind als Induktions-Kochstellen ausgebildet. Ein Kochgutträger 5 überlappt sämtliche der Kochstellen 4 in einer Draufsicht. Der Kochgutträger 5 ist als Glas-Keramik-Platte ausgebildet.

Das Kochfeld 2 umfasst ferner eine Benutzerschnittstelle 6, welche als berührungsempfindlicher Bildschirm ausgebildet ist. Die Benutzerschnittstelle 6 wird von dem Kochgutträger 5 in einer Draufsicht überlappt. Die Benutzerschnittstelle 6 ist zum Steuern der Kochstellen 4 und der Dunstabzugsvorrichtung 3 ausgebildet und steht mit diesen Komponenten hierzu in Signalverbindung.

Eine Kochdunsteintrittsöffnung 7 der Dunstabzugsvorrichtung 3 durchdringt den Kochgutträger 5. Die Kochdunsteintrittsöffnung 7 ist in einem zentralen Bereich des Kochgutträgers 5 angeordnet, insbesondere überlappt die Kochdunsteintrittsöffnung 7 den geometrischen Flächenschwerpunkt des Kochgutträgers 5 in einer Draufsicht.

Die Dunstabzugsvorrichtung 3 umfasst mindestens einen, nicht dargestellten Abzugslüfter zum Abzug der Kochdünste. Zwischen der Kochdunsteintrittsöffnung 7 und dem Abzugslüfter ist ein Unterdruck-Kanalabschnitt eines Abluftkanals 8 angeordnet. Der Abluftkanal 8 umfasst einen sich an den mindestens einen Abzugslüfter anschließenden Überdruck-Kanalabschnitt 9. Das Kochfeld 2 mit den Kochstellen 4 und dem Kochgutträger 5 ist zusammen mit einem Teil der Dunstabzugsvorrichtung 3, insbesondere dem Unterdruck-Kanalabschnitt und dem mindestens einen Abzugslüfter, zu einer einteilig ausgebildeten Montageeinheit 10 integriert.

Die Montageeinheit 10 ist in eine hinsichtlich ihrer Abmessungen korrespondierende Aussparung einer Küchenarbeitsplatte 11 eingesetzt. Insbesondere ist eine Oberfläche des Kochgutträgers 5 flächenbündig zu den Oberflächen der Küchenarbeitsplatte 11 angeordnet. Die Küchenarbeitsplatte 11 ist auf einem Küchenunterschrank 12 positioniert. Die Kochfelder 2 und die Dunstabzugsvorrichtung 3 erstrecken sich in einem Stauraum 13 des Küchenunterschranks 12.

Der Überdruck-Kanalabschnitt 9 erstreckt sich zwischen den Abzugslüftern und einer nicht dargestellten, an einer Sockelleiste 14 des Küchenunterschranks 12 angeordneten Kochdunstaustrittsöffnung. In dem Unterdruck-Kanalabschnitt 9 ist ein Fettfilter angeordnet. In dem Überdruck-Kanalabschnitt 9 ist ein Geruchsfilter 15 angeordnet. Der Geruchsfilter 15 umfasst einen Strömungskanal 16. Der Strömungskanal 16 ist Teil des Überdruck-Kanalabschnitts 9. Zum Anschluss von vor- und/oder nachgeschalteten Kanalelementen 17 umfasst der Strömungskanal 16 zur luftdichten Verbindung ausgebildete Kanalanschlussmittel 17a.

Der Geruchsfilter 15 weist ein Trägerelement 18 auf. Das Trägerelement 18 umfasst ein zickzack-förmig gefaltetes, glasfaserhaltiges Substrat. Die Falten 19 des Trägerelements 18 sind parallel zueinander orientiert. Zu einer durch den Strömungskanal 16 vorgegebenen Hauptströmungsrichtung 20 sind die Falten 19 senkrecht orientiert. Ein den Strömungskanal 16 bildendes Gehäuse 21 des Geruchsfilters 15 besteht im Wesentlichen aus Aluminium. Das Gehäuse 21 und das keramische Trägerelement 18 sind somit besonders korrosionsbeständig.

Das Trägerelement 18 ist mit einem katalytischen Material 22, insbesondere Titandioxid TiO₂, elektrostatisch beschichtet. Das katalytische Material 22 bedeckt mindestens 70 % der einander gegenüberliegenden Hauptflächen 23 des Trägerelements 18.

Der Geruchsfilter 15 umfasst zwei Strahlungsquelleneinheiten 24, an einer Oberseite und einer Unterseite, mit einer Vielzahl von Strahlungsquellen 25 zum Bestrahlen des katalytischen Materials 22 mit elektromagnetischer Strahlung 25a zum Bewirken einer katalytischen Reaktion. Das katalytische Material 22 ist ein photokatalytisches Material. Die Strahlungsquellen 25 sind zur Emission von Licht ausgebildet, insbesondere mit einer Wellenlänge im Bereich von 320 nm bis 480 nm.

Die Strahlungsquellen 25 sind in eine erste Gruppe 26 und eine zweite Gruppe 27 unterteilbar. Die erste Gruppe 26 unterscheidet sich von der zweiten Gruppe 27 anhand des Emissionsspektrums. Die Intensitätsmaxima der Emissionsspektren der ersten Gruppe 26 und der zweiten Gruppe 27 unterscheiden sich um 30 nm.

Bei den Strahlungsquellen 25 handelt es sich um lichtemittierende Dioden. Die Strahlungsquellen 25 sind auf einer ebenen Oberfläche 28 einer Leiterplatte 29 angebracht. Die Leiterplatte 29 ist mittels Schraubverbindungen an dem Gehäuse 21 angebracht. Der Geruchsfilter 15 umfasst zwei der mit den Strahlungsquellen 25 ausgestatteten Leiterplatten 29. Die Leiterplatten 29 sind parallel zu einer Haupterstreckungsebene des Trägerelements 18 orientiert und überlappen das Trägerelement 18 in einer Richtung senkrecht zu dieser Haupterstreckungsebene.

Die Strahlungsquellen 25 der ersten Gruppe 26 und der zweiten Gruppe 27 sind entlang der Hauptströmungsrichtung 20 und senkrecht zu der Hauptströmungsrichtung 20 jeweils einander abwechselnd angeordnet. Ein Strahlungsquellenabstand x zwischen den Strahlungsquellen 25 entlang der Hauptströmungsrichtung 20 und ein Strahlungsquellenabstand y zwischen den Strahlungsquellen 25 senkrecht zu der Hauptströmungsrichtung 20, insbesondere parallel zu der Leiterplatte 29, sind zwischen sämtlichen der Strahlungsquellen 25 einer Leiterplatte 29 identisch.

Die von den Strahlungsquelleneinheiten 24 maximal emittierte Lichtleistung beträgt 10 W/m². Die Abmessungen des Geruchsfilters 15, insbesondere des Gehäuses 21, betragen 440 mm in der Breite und 330 mm in der Tiefe. Eine Bauhöhe H des Geruchsfilters 15 beträgt 75 mm. Der Strömungskanal 16 ist luftdicht ausgebildet, insbesondere ist der Strömungskanal 16 bis 300 Pa druckbeständig.

Der Geruchsfilter 15 umfasst eine Steuereinrichtung 31 zum Steuern elektromagnetischer Strahlung 25a zwischen mindestens drei unterschiedlichen Intensitätsniveaus und zwischen unterschiedlichen Wellenlängenverteilungen. Die Steuereinrichtung 31 steht hierzu in Signalverbindung mit den Strahlungsquelleneinheiten 24. Die Signalverbindung 32 ist zum voneinander unabhängigen Steuern der Strahlungsquelleneinheiten 24, insbesondere der Strahlungsquellen 25 der ersten Gruppe 26 und der zweiten Gruppe 27 ausgebildet. Hierzu umfasst die Steuereinrichtung 31 eine Bus-Schnittstelle. Die Signalverbindung 32 ist zum Übertragen von Bus-Signalen ausgebildet. Zwischen jeder der Strahlungsquellen 25 und der Signalverbindung 32 ist je ein LED-Treiber zum Beschalten der jeweiligen Strahlungsquelle 25 mit elektrischer Leistung anhand von Steuersignalen der Steuereinrichtung 31 angeordnet.

Der Geruchsfilter 15 umfasst einen Sensor 33 zum Erfassen eines Messwerts, welcher mit einem Massenstrom des zu behandelnden Luftstroms korreliert. Der Sensor 33 ist über eine Sensor-Signalverbindung 34 an die Steuereinrichtung 31 angeschlossen. Der Sensor 33 ist als Drucksensor ausgebildet.

Die Steuereinrichtung 31 ist über eine Kochfeld-Signalverbindung mit einer nicht dargestellten Kochfeldsteuerung verbunden. Die Kochfeldsteuerung ist zum Steuern des Kochfelds 2 und der Dunstabzugsvorrichtung 3, insbesondere des mindestens einen Abluftlüfters, ausgebildet.

Die Funktionsweise des Kochfeldsystems 1, der Dunstabzugsvorrichtung 3 und des Geruchsfilters 15 ist wie folgt:
Mittels der Benutzerschnittstelle 6 wird das Kochfeldsystem 1 von einem Benutzer aktiviert. Die mit der Benutzerschnittstelle 6 in Signalverbindung stehende Kochfeldsteuerung stellt aufgrund einer Benutzereingabe eine elektrische Leistung an den Kochstellen 4 bereit. Über den Kochstellen 4 platziertes Kochgut wird erwärmt.

Über dem erwärmten Kochgut entstehen Kochdünste. Zum Abzug der Kochdünste aktiviert der Benutzer die Dunstabzugsvorrichtung 3 über die Benutzerschnittstelle 6. Mittels der Kochfeldsteuerung wird der Abzugslüfter auf einem bestimmten Leistungsniveau betrieben. Die Kochdünste werden aus dem Bereich oberhalb des Kochfelds 2 angesaugt und durch die Kochdunsteintrittsöffnung 7, den Unterdruck-Kanalabschnitt und den Abzugslüfter in den Überdruck-Kanalabschnitt 9 gefördert.

Von der Kochfeldsteuerung wird ein Signal an die Steuereinrichtung 31 zum Aktivieren des Geruchsfilters 15 bereitgestellt. Von der Kochfeldsteuerung werden zudem Informationen an die Steuereinrichtung 31 übertragen, welche das aktuelle Leistungsniveau umfassen, mit dem der Abzugslüfter betrieben wird. Mittels des Sensors 33 erfasst die Steuereinrichtung 31 den mit dem Massenstrom des zu behandelnden Luftstroms korrelierenden Messwert.

Über die Signalverbindung 32 werden die Strahlungsquellen 25 der ersten Gruppe 26 und der zweiten Gruppe 27 mittels der Steuereinrichtung 31 mit elektrischer Leistung beaufschlagt. Die elektrische Leistung wird anhand des Leistungsniveaus des Abzugslüfters und des von dem Sensor 33 erfassten Messwerts gesteuert. Diese Leistungssteuerung erfolgt zwischen der Steuereinrichtung 31 und den LED-Treibern über ein digitales Datensignal und zwischen den LED-Treibern und den Strahlungsquellen 25 mittels pulsweitenmodulierter Leistung. An den Strahlungsquellen 25 der ersten Gruppe 26 wird zunächst mehr elektrische Leistung bereitgestellt als an den Strahlungsquellen 25 der zweiten Gruppe 27.

Die Strahlungsquellen 25 emittieren Licht. Eine Hauptabstrahlrichtung der Strahlungsquellen 25 ist im Wesentlichen senkrecht zu der Haupterstreckungsebene des Trägerelements 18 orientiert. Das katalytische Material 22 wird mit der Strahlung 25a beaufschlagt. Die über die Strahlung 25a auf das katalytische Material 22 übertragene Energie bewirkt ein Anheben von Elektronen aus einem Grundzustand in einen energiereichen Zustand, insbesondere aus einem Valenzband in ein Leitungsband. In dem energiereichen Zustand werden Elektronen auf die über das katalytische Material 22 geleitete Luft übertragen. Hierdurch wird eine Reaktion des Luftsauerstoffs erzwungen, insbesondere wird molekularer Sauerstoff in Sauerstoffatome aufgespalten. Hierbei entstehen als Reaktionsprodukte Hydroxid-Radikale und Ozon.

Die Reaktionsprodukte der photokatalytischen Reaktion reagieren mit den im Kochdunst enthaltenen Geruchsstoffen. Die Geruchsstoffe werden hierdurch zersetzt und sind olfaktorisch nicht mehr wahrnehmbar. Hauptsächlich werden die Geruchsstoffe mittels des Geruchsfilters 15 also nicht aus dem Kochdunst gefiltert, sondern in nicht wahrnehmbare Verbindungen umgewandelt.

Der Umfang der photokatalytischen Reaktion und damit der Beseitigung von Geruchsstoffen ist abhängig von der Intensität und der Wellenlängenverteilung der Strahlung 25a. Das Anheben der Elektronen aus dem Grundzustand in den energiereichen Zustand kann nur bei bestimmten Wellenlängen erfolgen. Mittels der Steuereinrichtung 31 werden die Intensität und die Wellenlängenverteilung der Strahlung 25a entsprechend des Leistungsniveaus des Abzugslüfters und des mittels des Sensors 33 erfassten Messwerts geregelt.

Zum Einstellen des auf das katalytische Material 22 eingestrahlten Emissionsspektrums wird die auf die erste Gruppe 26 und die zweite Gruppe 27 der Steuerungsquellen 25 übertragene elektrische Energie variiert. Die zweite Gruppe 27 wird mit einer höheren elektrischen Leistung versorgt als die erste Gruppe 26.

Die Steuerung der Intensität und der Wellenlängenverteilung der Strahlung 25a gewährleistet die Einflussnahme auf die Menge und Zusammensetzung der an dem katalytischen Material 22 entstehenden Reaktionsprodukte. Hierdurch können die Geruchsstoffe besonders gezielt und effizient abgebaut werden. Eine Belastung der Umgebung mit Produkten der photokatalytischen Reaktion kann auf ein notwendiges Minimum reduziert werden.

Dadurch, dass die Falten 19 des Trägerelements 18 senkrecht zu der Hauptströmungsrichtung 20 orientiert sind, kommt es zu Verwirbelungen und der Kochdunststrom ist im Bereich des katalytischen Materials 22 turbulent. Hierdurch wird vorteilhaft gewährleistet, dass die zunächst an der Oberfläche des katalytischen Materials 22 vorliegenden Produkte der photokatalytischen Reaktion innerhalb eines besonders kurzen Zeitraums mit den transportierten Geruchsstoffen vermengt werden. Der Abbau der Geruchsstoffe kann somit nochmals effektiver erfolgen.

Anhand der Fig. 3 ist nachfolgend eine weitere Ausführungsform des erfindungsgemäßen Geruchsfilters 15 beschrieben. Im Unterschied zu der vorstehend beschriebenen Ausführungsform umfasst der Geruchsfilter 15 drei der Trägerelemente 18. Die Strahlungsquelleneinheiten 24 sind entsprechend dem vorstehend beschriebenen Ausführungsbeispiel an oberen und unteren, parallel zu der Haupterstreckungsebene der Trägerelemente 18 orientierten Wandungen 30 angeordnet. Zusätzlich sind weitere Strahlungsquelleneinheiten 24 zwischen je zwei benachbarten Trägerelementen 18 angeordnet. Die Strahlungsquellen 25 sind wiederum an Leiterplatten 29 angebracht.

An den zwischen den Trägerelementen 18 angeordneten Leiterplatten 29 sind die Strahlungsquellen 25 an beiden einander gegenüberliegenden Hauptflächen der Leiterplatte 29 angeordnet. Mittels der Strahlungsquellen 25 können somit die einander gegenüberliegenden Hauptflächen 23 in sämtlichen der Trägerelemente 18 mit der Strahlung 25a beaufschlagt werden.

Die Trägerelemente 18 sind zickzack-förmig gefaltet. Die Falten 19 der Trägerelemente 18 sind parallel zu der Hauptströmungsrichtung 20 orientiert.

Die Strahlungsquellen 25 der Strahlungsquelleneinheiten 24 sind alle identisch ausgebildet und hinsichtlich ihrer Emissionsspektren einstellbar. Ein Sensor 33 zum Erfassen eines mit einem Massenstrom des zu behandelnden Luftstroms korrelierenden Messwerts ist nicht vorgesehen. Die Steuereinrichtung 31 steht mit der Kochfeldsteuerung in Signalverbindung. Insbesondere ist die Steuereinrichtung 31 dazu ausgebildet, die Intensität der Strahlung 25a anhand eines Leistungsniveaus der Dunstabzugsvorrichtung 3, insbesondere des Abzugslüfters, einzustellen.

Der Luftwiderstand des Geruchsfilters 15 ist aufgrund der parallelen Orientierung der Falten 19 zu der Hauptströmungsrichtung 20 besonders gering. Verwirbelungen der Kochdunstströmung im Bereich des katalytischen Materials 22 werden weitestgehend vermieden. Aufgrund der Anordnung dreier der Trägerelemente 18 in dem Gehäuse 21 steht gegenüber der vorstehend beschriebenen Ausführungsform eine erheblich vergrößerte Oberfläche des katalytischen Materials 22 zur Verfügung. Trotz der verlängerten Durchmischung der Produkte der katalytischen Reaktion der Kochdunstströmung können die mit der Kochdunstströmung transportierten Geruchsstoffe aufgrund der vergrößerten Oberfläche des katalytischen Materials 22 zuverlässig abgebaut werden.

Im Übrigen entspricht die Funktionsweise des Geruchsfilters 15 weitestgehend der Funktionsweise gemäß dem vorstehend beschriebenen Ausführungsbeispiel.

Anhand der Fig. 4 ist eine weitere Ausführungsform der Erfindung beschrieben. Im Unterschied zu der vorstehend beschriebenen Ausführungsform umfasst der Geruchsfilter 15 ein einziges Trägerelement 18, wobei die Falten parallel zu einer Hauptströmungsrichtung 20 des Kochdunststroms orientiert sind. Die Strahlungsquellen 25 sind zum Bestrahlen beider Hauptflächen 23 im Bereich der oberen und der unteren Wandungen 30 in einem rasterförmigen Muster angeordnet.

Die Funktionsweise des Geruchsfilters 15 entspricht der Funktionsweise der vorstehend beschriebenen Geruchsfilter 15.

Anhand der Fig. 5 ist ein weiteres Ausführungsbeispiel der Erfindung beschrieben. Im Unterschied zu den vorstehend beschriebenen Ausführungsformen weist der Geruchsfilter 15 an Seitenwänden 35 des Gehäuses 21 angeordnete Strahlungsquelleneinheiten 24 auf. Die Trägerelemente 18 sind als ebene Platten ausgebildet. Insbesondere sind die Trägerelemente 18 senkrecht zu den Seitenwänden 35 orientiert. Insgesamt umfasst der Geruchsfilter 15 drei der Trägerelemente 18. Mehrere der Strahlungsquellen 25 sind jeweils zwischen zwei der Trägerelemente 18 angeordnet.

Die Strahlungsquellen 25 sind derart ausgerichtet, dass die elektromagnetische Strahlung 25a parallel zu einer Haupterstreckungsebene der Trägerelemente 18 emittiert wird. Dadurch, dass die Strahlungsquellen 25 an den Seitenwänden 35 angeordnet sind, kann ein Abstand z zwischen den benachbarten Trägerelementen 18 besonders gering ausgebildet sein. Eine besonders große Oberfläche des photokatalytischen Materials und eine intensive Durchmischung der Produkte der photokatalytischen Reaktion mit den im Kochdunststrom transportierten Geruchsstoffen werden hierdurch gewährleistet.

Sämtliche der Strahlungsquellen 25 sind identisch ausgebildet und hinsichtlich ihrer Emissionsspektren unterschiedlich einstellbar. Hierzu sind die Strahlungsquellen 25 über die Signalverbindung mit der nicht dargestellten Steuereinrichtung 31 verbunden.

Die Funktionsweise des Geruchsfilters 15 gemäß dem in der Fig. 5 dargestellten Ausführungsform entspricht der Funktionsweise des Geruchsfilters 15 gemäß den vorstehend beschriebenen Ausführungsformen.

Anhand der Fig. 6 ist ein weiteres Ausführungsbeispiel der Erfindung beschrieben. Im Unterschied zu den vorstehend beschriebenen Ausführungsformen ist der Geruchsfilter 15 modular ausgebildet und weist ein separates Gehäuses 21 mit Kanalanschlussmitteln 17a auf. Die Kanalanschlussmittel 17a sind zustromseitig und abstromseitig an dem Geruchsfilter 15 vorgesehen. Zum Erleichtern des Transports und der Montage des Geruchsfilters 15 sind an dem Gehäuse 21 Griffe 36 vorgesehen. Über Schnittstellenmittel 37 kann der Geruchsfilter 15 an die Steuereinrichtung 31 angeschlossen und mit elektrischer Leistung versorgt werden.

Die Funktionsweise des Geruchsfilters 15 gemäß der in der Fig. 6 dargestellten Ausführungsform entspricht der Funktionsweise des Geruchsfilters 15 gemäß den vorstehend beschriebenen Ausführungsformen.

Anhand der Fig. 7A und 7B ist ein weiteres Ausführungsbeispiel der Erfindung beschrieben. Im Unterschied zu den vorstehend beschriebenen Ausführungsformen weist der Geruchsfilter 15 ein Trägerelement 18 auf, das ein dreidimensionales Abstandsgewirk 38 aufweist, insbesondere aus diesem besteht. Ein Ausschnitt des dreidimensionalen Abstandsgewirks 38 ist in der Fig. 7B im Detail dargestellt. Das dreidimensionale Abstandsgewirk 38 weist zwei Deckschichten 39 und eine zwischen den Deckschichten 39 angeordnete Kernschicht 40 auf. Die Deckschichten 39 und die Kernschicht 40 weisen ein Fasermaterial, insbesondere aus einem Kunststoff, insbesondere Polyester, auf. Die Deckschichten 39 und die Kernschicht 40 bestehen aus demselben Material. Sie sind in einem einzigen Verfahrensschritt hergestellt. Insbesondere sind die Deckschichten 39 und die Kernschicht 40 aus denselben Fasern 41 gewirkt.

Das Trägerelement 18 ist von einem Fluid, insbesondere von Luft, durchströmbar. Die Kernschicht 40 weist, insbesondere in Hauptströmungsrichtung 20, einen geringeren Strömungswiderstand auf als die Deckschichten 39, insbesondere senkrecht zu der Hauptströmungsrichtung 20. Das dreidimensionale Abstandsgewirk 38 ist derart ausgebildet, dass zwischen den Deckschichten 39 mindestens ein Träger-Strömungskanal 42 zum Führen der Luft ausgebildet ist.

Das Trägerelement 18 ist an einem Trägerrahmen 43 angebracht. Der Trägerrahmen 43 erhöht die Formstabilität des Trägerelements 18 und ist zu dessen Befestigung an dem Gehäuse 21 ausgebildet. Der Trägerrahmen 43 weist eine Zuströmöffnung 44 und eine Abströmöffnung 45 auf. Die Zuströmöffnung 44 ist vorzugsweise mit einem nicht dargestellten Kanalelement 17 des Strömungskanals 16 verbunden. Vorteilhaft wird hierdurch erreicht, dass die über den Strömungskanal 16 geförderte Luft vollständig durch die Zuströmöffnung 44 in das Trägerelement 18 eingeleitet wird.

Alternativ kann der Strömungskanal 16, insbesondere mittels des Kanalanschlussmittels 17a, an dem Gehäuse 21 angeschlossen sein. Vorzugsweise ist die Zuströmöffnung 44 nicht unmittelbar an den Strömungskanal 16 angeschlossen. Der Strömungskanal 16 kann derart an den Geruchsfilter 15 angeschlossen sein, dass die über den Strömungskanal 16 geleitete Luft nur teilweise, insbesondere nicht vollständig durch die Zuströmöffnung 44 geleitet wird.

Das Trägerelement 18 ist plattenförmig ausgebildet. Die Deckschichten 39 sind an den Hauptflächen 46, also an den beiden größten Flächen des Trägerelements 18, angeordnet. Im Bereich der Hauptflächen 46 weist der Trägerrahmen 43 Aussparungen 47 auf, die einen Großteil der Hauptflächen 46 überlappen. Die Deckschichten 39 setzen einer Luftströmung zwar einen größeren Widerstand entgegen als die Kernschichten 40. Grundsätzlich sind die Deckschichten 39 aber luftdurchlässig. Über die Deckschichten 39 und die Aussparungen 47 kann Luft aus dem Trägerelement 18 und dem Trägerrahmen 43 in das Gehäuse 21 entweichen.

Das dreidimensionale Abstandsgewirk 38, insbesondere die Deckschichten 39 und die Kernschicht 40, insbesondere die Fasern 41, sind mit dem katalytischen Material 22 benetzt. Insbesondere ist das dreidimensionale Abstandsgewirk 38 mit dem katalytischen Material 22, insbesondere in einem Tauchprozess, beschichtet.

Die Funktionsweise des Geruchsfilters 15 gemäß der in der Fig. 7A und 7B dargestellten Ausführungsform ist wie folgt:
Entsprechend den vorstehend beschriebenen Ausführungsbeispielen werden Kochdünste über den Strömungskanal 16 in den Geruchsfilter 15 geleitet. Die Kochdünste gelangen über die Zuströmöffnung 44 in das dreidimensionale Abstandsgewirk 38. Zwischen den Deckschichten 39 werden die Kochdünste in der Kernschicht 40 von der Zuströmöffnung 44 zu der Abströmöffnung 45 geleitet. Die Kochdünste treten entlang dieses von den Deckschichten 39, insbesondere zusammen mit dem Trägerrahmen 43, gebildeten Träger-Strömungskanals 42 zumindest teilweise, insbesondere vollständig oder nicht vollständig, über die Hauptflächen 46 und die Aussparungen 47 aus dem Trägerelement 18 aus. Das katalytische Material 22 wird von den Kochdünsten dabei besonders effizient umspült.

Entsprechend der vorstehend beschriebenen Ausführungsbeispiele wird das katalytische Material 22 mittels der Strahlungsquellen 25 bestrahlt. Das Trägerelement 18, insbesondere die Deckschichten 39 sind für die von den Strahlungsquellen 25 emittierte Strahlung 25a zumindest teilweise, insbesondere nicht vollständig, durchlässig ausgebildet. Somit wird gewährleistet, dass die katalytische Reaktion sowohl an dem katalytischen Material 22 stattfindet, das an den Deckschichten 39 anhaftet, als auch an dem an der Kernschicht 40 anhaftenden katalytischen Material 22.

Im Übrigen entspricht die Funktionsweise des Geruchsfilters 25 der Funktionsweise der Geruchsfilter 15 gemäß den vorstehend beschriebenen Ausführungsformen.

Gemäß einer nicht dargestellten alternativen Ausführungsform können das Trägerelement 18 und/oder der Trägerrahmen 43 zusätzliche Schichten zur Festlegung der über die Deckschichten 39 strömenden Kochdünste aufweisen. Beispielsweise kann an den Deckschichten 39 und/oder über den Aussparungen 47 eine Schicht aus einem faserigen und/oder porösen Material, insbesondere ein Fleece, und/oder eine Glasscheibe angeordnet sein. Vorzugsweise ist die jeweilige zusätzliche Schicht für die von der Strahlungsquelle 25 erzeuge Strahlung 25a zumindest teilweise, insbesondere vollständig, durchlässig ausgebildet.

Anhand der Fig. 8 ist ein weiteres Ausführungsbeispiel der Erfindung beschrieben. Im Unterschied zu den vorstehend beschriebenen Ausführungsbeispielen weist der Geruchsfilter 15 mehrere zickzack-förmig angeordnete Trägerelemente 18 auf. Die Trägerelemente 18 sind quer zu deren Hauptflächen 46 durchströmbar ausgebildet. Hierzu weisen die Trägerelemente 18 ein dreidimensionales Abstandsgewirk 38 auf. Die Trägerelemente 18 sind in dem Gehäuse 21 derart angeordnet, dass jedes der Trägerelemente 18 von dem durch den Geruchsfilter 15 geleiteten Kochdunst vollständig durchströmt werden muss.

Der Geruchsfilter 15, insbesondere die Strahlungsquelleneinheit 24 weist eine dritte Gruppe 48 von Strahlungsquellen 25 auf. Die dritte Gruppe 48 von Strahlungsquellen 25 ist zum Emittieren von UV-C, zum Bestrahlen der Trägerelemente 18 mit der UV-C Strahlung 25a, ausgebildet.

Die Innenseiten 49 des Gehäuses 21 weisen eine Spiegelschicht 50 zur Reflexion der von der Strahlungsquelleneinheit 24 bereitgestellten Strahlung 25a auf. Die Spiegelschicht 50 reflektiert mindestens 90 % der von der Strahlungsquelleneinheit 24 bereitgestellten Strahlung 25a.

Die Funktionsweise des Geruchsfilters 15 ist wie folgt:
Die Kochdünste werden über den Strömungskanal 16 in den Geruchsfilter 15 geleitet. Die Kochdünste durchströmen nacheinander die Trägerelemente 18 über deren Hauptflächen 46. Die mit dem katalytischen Material 22 benetzten Trägerelemente 18 werden entsprechend der vorstehenden Beschreibung mittels der Strahlungsquelleneinheit 24 mit der Strahlung 25a beaufschlagt. Mit den Kochdünsten mitgeführte Geruchsstoffe werden dabei abgebaut.

Mittels der von den Strahlungsquellen 25 der dritten Gruppe 48 emittierten Strahlung werden Keime und/oder Viren in dem Geruchsfilter 15, die insbesondere mit den Kochdünsten in den Geruchsfilter 15 gelangt sind, zerstört. Der Geruchsfilter 15 ist somit auch als Luftfilter zur Desinfektion der von der Dunstabzugsvorrichtung 3 abgesaugten Raumluft nutzbar.

Der mit dem katalytischen Material 22 gebildete Geruchsfilter 15 gewährleistet das Entfernen von Geruchsstoffen aus dem Kochdunst in effizienter und nachhaltiger Weise. Ein derartiger Geruchsfilter 15 weist gegenüber herkömmlichen Filtern, insbesondere Aktivkohlefiltern, eine deutlich erhöhte Standzeit auf. Die Dunstabzugsvorrichtung 3 und das Kochfeldsystem 1 sind somit besonders wartungsarm und wirtschaftlich betreibbar. Dadurch, dass die Geruchsfilter 15 die mindestens eine hinsichtlich ihrer Emissionsspektren unterschiedlichen einstellbare Strahlungsquelleneinheit 24 umfassen, ist die Zusammensetzung und Menge der gebildeten Produkte der katalytischen Reaktion steuerbar. Der Abbau der Geruchsstoffe kann somit besonders effizient erfolgen. Insbesondere kann die Belastung der Umgebung mit derartigen Reaktionsprodukten weitestgehend reduziert werden. Der Abbau der Geruchsstoffe erfolgt energieeffizient und umweltschonend.

## Patentansprüche

1. Geruchsfilter (15) für eine Dunstabzugsvorrichtung (3), aufweisend
- mindestens ein Trägerelement (18) mit mindestens einem katalytischen Material (22), und
- mindestens eine Strahlungsquelleneinheit (24) zum Bestrahlen des katalytischen Materials (22) mit elektromagnetischer Strahlung (25a) zum Bewirken einer katalytischen Reaktion,
- wobei die mindestens eine Strahlungsquelleneinheit (24) hinsichtlich ihres Emissionsspektrums unterschiedlich einstellbar ist.

2. Geruchsfilter (15) nach Anspruch 1, **dadurch gekennzeichnet, dass** die mindestens eine Strahlungsquelleneinheit (24) mindestens eine hinsichtlich ihres Emissionsspektrums unterschiedlich einstellbare Strahlungsquelle (25) und/oder mindestens zwei hinsichtlich ihrer Emissionsspektren unterschiedliche Strahlungsquellen (25) aufweist.

3. Geruchsfilter (15) nach Anspruch 1 oder 2, **dadurch gekennzeichnet, dass** es sich bei der mindestens einen Strahlungsquelle (25) um eine lichtemittierende Diode handelt.

4. Geruchsfilter (15) nach Anspruch 3, **gekennzeichnet durch** eine Vielzahl von lichtemittierenden Dioden, welche in einer rasterförmigen Anordnung und/oder auf einer ebenen Oberfläche eines Strahlungsquellenträgers (29) angeordnet sind.

5. Geruchsfilter (15) nach einem der vorstehenden Ansprüche, **gekennzeichnet durch** mindestens einen Sensor (33) zum Erfassen mindestens eines Messwerts, welcher mit einer Geruchsintensität und/oder einer Feuchtigkeit und/oder einem Massenstrom eines zu behandelnden Luftstroms korreliert.

6. Geruchsfilter (15) nach einem der vorstehenden Ansprüche, **gekennzeichnet durch** eine Steuereinrichtung (31) zum Steuern zwischen mindestens drei unterschiedlichen Intensitäten und/oder zwischen unterschiedlichen Wellenlängenverteilungen der mittels der mindestens einen Strahlungsquelleneinheit (24) erzeugten elektromagnetischen Strahlung (25a).

7. Geruchsfilter (15) nach Anspruch 6, **dadurch gekennzeichnet, dass** die Steuereinrichtung (31) zum Steuern der Intensität und/oder der Wellenlängenverteilung anhand des mindestens einen Messwerts mit dem mindestens einen Sensor (33) in Signalverbindung steht.

8. Geruchsfilter (15) nach einem der vorstehenden Ansprüche, **gekennzeichnet durch** einen Strömungskanal (16), welcher eine Hauptströmungsrichtung (20) für einen zu behandelnden Luftstrom bestimmt, wobei die mehreren Trägerelemente (18) parallel zueinander und/oder senkrecht zu der Hauptströmungsrichtung (20) einander überlappend angeordnet sind.

9. Geruchsfilter (15) nach einem der vorstehenden Ansprüche, **dadurch gekennzeichnet, dass** das Trägerelement (18) ein plattenförmiges und/oder ein poröses und/oder ein durchströmbares und/oder ein faserhaltiges Substrat umfasst und/oder gewellt und/oder gefaltet ist.

10. Geruchsfilter (15) nach Anspruch 9, **gekennzeichnet durch** einen Strömungskanal (16), welcher eine Hauptströmungsrichtung (20) für einen zu behandelnden Luftstrom bestimmt, wobei die Wellung und/oder die Falten (19) des Trägerelements (18) senkrecht zu der Hauptströmungsrichtung (20) orientiert sind.

11. Geruchsfilter (15) nach einem der vorstehenden Ansprüche, **dadurch gekennzeichnet, dass** das mindestens eine Trägerelement (18) mit dem katalytischen Material (22) elektrostatisch beschichtet ist.

12. Dunstabzugsvorrichtung (3), mit
12.1. einem Abluftkanal (8) zum Leiten eines Luftstroms,
12.2. mindestens einem, an den Abluftkanal (8) angeschlossenen Abzugslüfter zum Fördern des Luftstroms, und
12.3. mindestens einem, an den Abluftkanal (8) angeschlossenen Geruchsfilter (15) nach einem der Ansprüche 1 bis 11.

13. Dunstabzugsvorrichtung (3) nach Anspruch 12, **dadurch gekennzeichnet, dass** die Steuereinrichtung (31) in Signalverbindung steht mit einer Lüftersteuerung.

14. Kochfeldsystem (1), mit
14.1. einem Kochfeld (2) zum Erwärmen von Kochgut, und
14.2. einer Dunstabzugsvorrichtung (3) nach Anspruch 12 oder 13.

15. Geruchsfilter (15) für eine Dunstabzugsvorrichtung (3), aufweisend
15.1. mindestens ein Trägerelement (18) mit einem katalytischen Material (22), und
15.2. mindestens eine Strahlungsquelleneinheit (24) zum Bestrahlen des katalytischen Materials (22) mit elektromagnetischer Strahlung (25a) zum Bewirken einer katalytischen Reaktion.
